# EUROPÄISCHE PATENTANMELDUNG

(11) **EP 1 867 853 A2**
(43) Veröffentlichungstag der Anmeldung: **19.12.2007**
(21) Anmeldenummer: 07011455.8
(22) Anmeldetag: 12.06.2007
(51) Int. Cl.: F02D 11/02

(54) **Kraftfahrzeug**

(30) Priorität: 14.06.2006 DE 102006027548
(71) Anmelder: AUDI AKTIENGESELLSCHAFT, 85045 Ingolstadt (DE)
(72) Erfinder: Limbacher, Reimund, 85055 Ingolstadt (DE)
(74) Vertreter: Thielmann, Frank

(57) **Zusammenfassung**

Kraftfahrzeug, umfassend einen Motor (2) und eine Steuerungseinrichtung (3) für den Motor (2), wobei wenigstens ein manuell zu betätigendes, mit der Steuerungseinrichtung (3) kommunizierendes Bedienelement (11, 11a, 11b) vorgesehen ist, durch das bei Betätigung wenigstens ein digitales Signal (15, 20, 25, 28, 29, 31, 35) zur Steuerung der Fahrzeuggeschwindigkeit erzeugbar ist, wobei während der Betätigung des Bedienelements (11, 11a, 11b) die Steuerungseinrichtung (3) in Abhängigkeit des ihr von dem Bedienelement (11, 11a, 11 b) übermittelten Signals (15, 20, 25, 28, 29, 31, 35) zur Ansteuerung des Motors (2) zum Beschleunigen oder Abbremsen des Kraftfahrzeugs (1) ausgebildet ist.

## Beschreibung

Die Erfindung betrifft ein Kraftfahrzeug, umfassend einen Motor und eine Steuerungseinrichtung für den Motor.

Bei so genannten Stop & Go-Fahrten, beispielsweise in einem Stau, erfolgt bei üblichen Kraftfahrzeugen eine häufige Bedienung von Gaspedal und Bremspedal, bei Fahrzeugen mit einem Handschaltgetriebe zusätzlich des Kupplungspedals. Dies kann auf einen Fahrer mühsam und ermüdend wirken.

Daher wurden Stauassistenzsysteme vorgeschlagen, welche allerdings nur in Verbindung mit Automatikgetrieben bekannt sind. Dabei wird eine Abstandssensorik verwendet, die beispielsweise den Abstand und/oder die Bewegung des voran fahrenden Fahrzeugs sensieren und den Motor entsprechend ansteuern können, so dass eine Folgefahrt ohne Betätigung von Gaspedal oder Bremspedal möglich ist. Diese Stauassistenzsysteme sind nachteilhaft, da sie nur in Verbindung mit einem Automatikgetriebe realisierbar sind und eine aufwändige Abstandssensorik benötigen.

Der Erfindung liegt daher die Aufgabe zugrunde, ein Kraftfahrzeug anzugeben, das eine einfache Bedienbarkeit bei Stop & Go-Fahrten, insbesondere in Stausituationen, unter Vermeidung komplexer Sensorik ermöglicht.

Zur Lösung dieser Aufgabe ist bei einem Kraftfahrzeug der eingangs genannten Art erfindungsgemäß vorgesehen, dass wenigstens ein manuell zu betätigendes, mit der Steuerungseinrichtung kommunizierendes Bedienelement vorgesehen ist, durch das bei Betätigung wenigstens ein digitales Signal zur Steuerung der Fahrzeuggeschwindigkeit erzeugbar ist, wobei während der Betätigung des Bedienelements die Steuerungseinrichtung in Abhängigkeit des ihr von dem Bedienelement übermittelten Signals zur Ansteuerung des Motors zum Beschleunigen oder Abbremsen des Kraftfahrzeugs ausgebildet ist.

Die Erfindung sieht demnach vor, zusätzlich zu den üblichen Bedienelementen zum Abbremsen und Beschleunigen des Kraftfahrzeugs, insbesondere dem Gaspedal und dem Bremspedal, wenigstens ein manuell, also mit der Hand, zu betätigendes Bedienelement zur Verfügung zu stellen, mit dem die Geschwindigkeit des Kraftfahrzeugs geregelt werden kann. Bei Betätigung des Bedienelements wird ein digitales Signal zur Steuerung der Fahrzeuggeschwindigkeit erzeugt, wobei insbesondere die Erzeugung zweier Signale, nämlich eines Beschleunigungssignals und eines Abbremssignals, möglich sein sollte. Das entsprechende Signal wird der Steuerungseinrichtung übermittelt, während das Bedienelement betätigt wird, das bedeutet, solange beispielsweise ein Bedienhebel entsprechend gedrückt oder ein Schalter entsprechend gehalten wird. Das Signal ist digital ausgelegt, das bedeutet, es gibt lediglich an, ob das Bedienelement entsprechend betätigt ist oder nicht. Daher ist es auch für die Steuerungseinrichtung leicht verarbeitbar.

Die Steuerungseinrichtung ist nun zur Ansteuerung des Motors zum Beschleunigen oder Abbremsen des Kraftfahrzeugs in Abhängigkeit des ihr von dem Bedienelement übermittelten Signals ausgebildet. Beispielsweise bedeutet dies, dass bei Erhalt eines Signals, das einen Beschleunigungswunsch des Fahrers anzeigt, also eines Beschleunigungssignals, der Motor in einer vorbestimmten Art zur Erhöhung der Geschwindigkeit des Kraftfahrzeugs angesteuert wird, solange das Bedienelement betätigt ist, folglich ein Signal übermittelt wird. Dies gilt selbstverständlich auch analog für den Fall, dass ein einen Abbremswunsch des Fahrers anzeigendes Signal, also ein Abbremssignal, übermittelt wird, woraufhin die Geschwindigkeit durch Ansteuerung des Bremssystems verringert wird.

Da es sich um ein digitales Signal handelt, ist das Abbrems- und/oder Beschleunigungsverhalten zunächst festgelegt. So kann beispielsweise eine Kennlinie vorgesehen sein, die angibt, wie stark bei welcher Geschwindigkeit beschleunigt beziehungsweise abgebremst werden soll. Das Kraftfahrzeug kann dabei bis in den Stillstand abgebremst werden und entsprechend zum Losfahren aus dem Stillstand mittels Betätigung des Bedienelements angesteuert werden.

Anstatt einer Bedienung der Pedalerie kann der Fahrer des erfindungsgemäßen Kraftfahrzeugs die Geschwindigkeit des Kraftfahrzeugs auch über eine dauerhafte Betätigung des oder der Bedienelemente variieren. Dies kann auf einfache Weise mittels der Hände erfolgen, eine umständliche Betätigung der Pedalerie ist nicht weiter erforderlich. Auch ein zusätzliches komplexes System, wie ein Stauassistenzsystem, ist vorteilhafterweise nicht notwendig.

In einer speziellen Ausgestaltung des Beschleunigungs- und/oder Abbremsverhaltens kann vorgesehen sein, dass aufgrund des Signals das Kraftfahrzeug gleichmäßig beschleunigbar oder abbremsbar ist. Während der Betätigung des Bedienelements erfolgt demnach eine lineare Erhöhung beziehungsweise Erniedrigung der Geschwindigkeit mit der Zeit Zur Ansteuerung des Motors kann dabei eine Kennlinie abgelegt sein, die dieses lineare Verhalten auf die Motorparameter abbildet.

Mit besonderem Vorteil kann eine Bedienfunktion zur Veränderung des zuvor bestimmten Beschleunigungs- und/oder Abbremsverhaltens vorgesehen sein. Damit wird für einen Benutzer eine Einflussnahme auf das Beschleunigungs- und/oder Abbremsverhalten ermöglicht. Zur Realisierung der Bedienfunktion kann beispielsweise ein weiteres Bedienelement vorgesehen sein, beispielsweise ein Regler, über den der Grad der Beschleunigung einstellbar ist. Über ein solches weiteres Bedienelement kann auch zwischen zwei diskret anwählbaren Beschleunigungs- und/oder Abbremsverhalten, beispielsweise zwischen zwei verschiedenen Kennlinien oder Kennliniensätzen, gewählt werden.

Zweckmäßigerweise ist die Bedienfunktion jedoch durch das Bedienelement anwählbar. Dann kann beispielsweise vorgesehen sein, dass als die Bedienfunktion ein Beenden der Betätigung des Bedienelements vorgesehen ist, wobei nach Beendigung der Betätigung für eine vorbestimmte Zeitdauer bei erneuter Betätigung ein verändertes Beschleunigungs- und/oder Abbremsverhalten anwählbar ist. Das bedeutet, der Fahrer kann durch kurzzeitiges Loslassen des betätigten Bedienelements ein verändertes, alternatives Beschleunigungs- und/oder Abbremsverhalten anwählen. Beispielsweise kann ein Fahrer, der stärker beschleunigen möchte, das bereits betätigte Bedienelement loslassen. Betätigt er innerhalb einer vorbestimmten Zeitdauer, beispielsweise innerhalb einer Sekunde, das Bedienelement erneut, so wird das Kraftfahrzeug wiederum beschleunigt, jedoch nun mit einer größeren Beschleunigung. Ein solcher Vorgang kann auch iterierbar sein, das bedeutet, wird das Bedienelement bei einem angewähltem veränderten Beschleunigung- und/oder Abbremsverhalten losgelassen, so kann für die vorbestimmte Zeitdauer bei erneuter Betätigung ein zweites, weiter verändertes Beschleunigungs- und/oder Abbremsverhalten anwählbar sein, beispielsweise eine noch schnellere Beschleunigungsstufe.

Das Anwählen des veränderten Beschleunigungs- und/oder Abbremsverhaltens muss nicht durch ein solches Loslassen des Bedienelements anwählbar sein, es kann auch vorgesehen sein, dass es beispielsweise durch eine kurze Betätigung des Bedienelements zur Verfügung gestellt wird. Dabei wäre beispielsweise an ein Antippen des Bedienelements zu denken. Auch kann die Funktionalität des Bedienelements weiter ausgeweitet werden. Beispielsweise bei einem zu drückenden Bedienelement kann vorgesehen sein, dass dieses gegen einen Widerstand weiter in Betätigungsrichtung drückbar ist, so dass hierdurch ein verändertes Beschleunigungs- und/oder Abbremsverhalten anwählbar ist.

Damit eine eindeutige Regelung des Bezugs des Bedienelements zu anderen Bedienelementen zur Beeinflussung der Fahrzeuggeschwindigkeit ermöglicht wird, ist eine Priorisierung der entsprechenden Bedienelemente notwendig. Zweckmäßigerweise kann vorgesehen sein, dass die Steuerungseinrichtung zur Nichtberücksichtigung der Signale bei einem betätigten Gas- und/oder Bremspedal ausgebildet ist. Das Gas- und/oder Bremspedal bietet zum einen aufgrund seiner analogen Konstruktion eine sehr viel genauere Regelung des Beschleunigungs- und/oder Abbremsverhaltens des Kraftfahrzeugs, zum anderen ist es das übliche, dem Fahrer bekannte Bedienelement, und sollte somit grundsätzlich Priorität über eine Betätigung des Bedienelements haben. So kann beispielsweise eine Vollbremsung notwendig sein, die über das Bedienelement nicht erreichbar ist. Dann kann der Fahrer wie gewohnt das Bremspedal betätigen, dessen Signal als das maßgebliche Signal von der Steuerungseinrichtung bevorzugt berücksichtigt wird.

Wie schon erwähnt ist es zweckmäßig, dass von dem wenigstens einen Bedienelement ein Abbremssignal und ein Beschleunigungssignal erzeugt werden kann. Dazu sind im Wesentlichen zwei Ausgestaltungen denkbar.

Zum einen kann vorgesehen sein, dass mittels des einen Bedienelements abhängig von der Art der Betätigung ein Abbremssignal und ein Beschleunigungssignal erzeugbar ist. Dabei ist nur ein Bedienelement vorgesehen, das jedoch auf mehrere Arten betätigbar ist. Abhängig von der Art der Betätigung wird dann ein Abbremssignal oder ein Beschleunigungssignal erzeugt und an die Steuerungseinrichtung übermittelt.

Alternativ kann vorgesehen sein, dass zwei Bedienelemente vorgesehen sind, wobei über das erste Bedienelement ein Abbremssignal und über das zweite Bedienelement ein Beschleunigungssignal erzeugbar ist. Dann sind zwei auch physikalisch getrennte Bedienelemente vorgesehen, von denen eines eindeutig dem Abbremsen, ein weiteres eindeutig dem Beschleunigen zugeordnet ist. Mit besonderem Vorteil sind die zwei Bedienelemente, insbesondere ihre Verschaltung, so ausgelegt, dass bei gleichzeitiger Betätigung der Bedienelemente nur ein Signal erzeugbar ist. Es kann jedoch auch vorgesehen sein, dass bei zwei erzeugten Signalen, also einem Abbremssignal und einem Beschleunigungssignal, die Steuerungseinrichtung zur bevorzugten Behandlung nur eines dieser Signale ausgebildet ist. Aus sicherheitstechnischen Gründen kann dabei beispielsweise das Bremssignal erzeugt beziehungsweise bevorzugt von der Steuerungseinrichtung behandelt werden.

In weiterer Ausgestaltung der Erfindung können das oder die Bedienelemente einem anderen Fahrzeugsystem, insbesondere einem Fahrerassistenzsystem, zugeordnete Bedienelemente sein. Gegebenenfalls können diese dann in ihrer Funktion veränderbar sein. Hierbei wird demnach kein zusätzliches Bedienelement vorgesehen, sondern ein Bedienelement, das ohnehin im Kraftfahrzeug verbaut ist. Beispielsweise kann die Funktionalität eines Blinkhebels vervielfältigt werden, indem das Signal durch Betätigung des Blinkhebels senkrecht zu der die Blinkleuchten auslösenden Richtung erzeugbar ist. Mit besonderem Vorteil können das oder die Bedienelemente einem Längsführungssystem zugeordnet sein. Insbesondere Abstandshaltesysteme oder Geschwindigkeitsregelsysteme werden von einem Fahrer ohnehin mit einer Geschwindigkeitsveränderung assoziiert. So können beispielsweise Tasten oder ein Bedienhebel, die normalerweise zur Erhöhung oder Erniedrigung einer Regelgeschwindigkeit dienen, auch zur Erzeugung des Signals im erfindungsgemäßen Kraftfahrzeug ausgelegt sein. Dies kann durch eine zusätzliche Funktionalität ermöglicht werden oder auch beispielsweise durch eine Umschaltung zwischen der Bedienmöglichkeit für das Fahrerassistenzsystem oder der erfindungsgemäßen Geschwindigkeitsregelung.

Damit das oder die Bedienelemente durch einen Fahrer zur manuellen Betätigung leicht erreichbar sind, können das oder die Bedienelemente im Griffbereich der am Lenkrad befindlichen Hände, also an oder benachbart zu einem Lenkrad, angeordnet sein. Dann muss der Fahrer keine weiten Griffbewegungen durchführen, sondern erhält eine einfache und komfortable Möglichkeit, beispielsweise im Stop & Go-Verkehr die Geschwindigkeit des Kraftfahrzeugs zu regeln. Insbesondere kann das Bedienelement auch ein am Lenkstock angeordneter Bedienhebel sein.

Eine solche manuelle Steuerung der Fahrzeuggeschwindigkeit kann dabei auch lediglich für das Fahren bei niedrigen Geschwindigkeiten, also insbesondere im genannten Anwendungsfall des Stop & Go-Verkehrs, ermöglicht werden. Dann kann eine Grenzgeschwindigkeit vorgesehen sein, bis zu der das Fahrzeug mittels Betätigung des oder eines Bedienelements beschleunigbar ist. Diese Grenzgeschwindigkeit kann 50 - 70 km/h, vorzugsweise 60 km/h, betragen. Die Sicherheit des Kraftfahrzeugs wird damit erhöht, da sich der Fahrer bei hohen Geschwindigkeiten nicht auf das - weitgehend vorbestimmte - Beschleunigungs- und/oder Abbremsverhalten, welches durch das Bedienelement anwählbar ist, verlassen kann.

Mit besonderem Vorteil kann ein solches Kraftfahrzeug auch ein Kraftfahrzeug mit einem manuellen Schaltgetriebe sein. Ein solches Getriebe umfasst dabei eine Kupplung und einen dieser zugeordneten Aktuator zum automatischen Öffnen der Kupplung beim Bremsen in den Stillstand und automatischen Schließen der Kupplung beim Anfahren aus den Stillstand, welcher Aktuator in Abhängigkeit des Signals ansteuerbar ist. Solche Aktuatoren wurden bislang meist in Zusammenhang mit Abstandshaltesystemen vorgeschlagen, um zu ermöglichen, dass das Abstandshaltesystem das Kraftfahrzeug ohne ein Abwürgen des Motors bis in den Stillstand abbremsen kann. Ein solcher Aktuator kann jedoch vorteilhafterweise auch im Rahmen der vorliegenden Erfindung Anwendung finden. Dann kann ein Bedienelement zur Steuerung der Fahrzeuggeschwindigkeit auch bei einem Handschaltgetriebe einsetzbar sein, so dass der Fahrer die Kupplung ebenso nicht mehr selber bedienen muss. Betätigt der Fahrer somit das Bedienelement in der Absicht, abzubremsen, wird der Aktuator aktiviert und es wird überprüft, wie hoch beispielsweise Geschwindigkeit und Drehzahl des Kraftfahrzeugs sind. Fällt aufgrund der Betätigung des Bedienelements die Geschwindigkeit des Kraftfahrzeugs beispielsweise unter 10 km/h, so beginnt sich die Kupplung zu öffnen, so dass mit schleifender Kupplung gefahren wird. Bis zum Stillstand wird die Kupplung dann ganz geöffnet, so dass ein Abwürgen des Motors verhindert wird. Ähnlich wird auch bei einer Betätigung des oder der Bedienelemente zum Zwecke der Beschleunigung durch den Fahrer der Aktuator aktiviert und entsprechende Überprüfungen vorgenommen. Aus dem Stillstand wird somit die Kupplung geschlossen.

Bei einer Ausgestaltung mit einem solchen der Kupplung zugeordneten Aktuator ist das Betätigen der Kupplung selber und das Schalten möglichst unabhängig von der Betätigung des Bedienelements ausgelegt, so dass es problemlos möglich ist, in höhere Gänge zu schalten, trotzdem die Geschwindigkeitsregelung lediglich manuell mittels des Bedienelements vorgenommen wird.

Weiterhin können die Bedienelemente, beispielsweise nach Überschreiten einer Grenzgeschwindigkeit, insbesondere aber auch oder zusätzlich durch ein weiteres Bedienelement, aktivierbar und/oder deaktivierbar sein. Dadurch kann beispielsweise verhindert werden, dass es zu Fehlbedienungen kommt. Insbesondere kann eine Deaktivierung des oder der Bedienelemente auch durch Betätigung eines Gaspedals und/oder eines Bremspedals und/oder eines Kupplungspedals auf einfache Weise erreicht werden.

Vorzugsweise umfasst das Kraftfahrzeug dann eine Anzeigevorrichtung zur Anzeige des aktivierten oder deaktivierten Zustands des oder der Bedienelemente. Eine solche Anzeigevorrichtung kann beispielsweise am Armaturenbrett, aber auch an jedem anderen, leicht einsehbaren Ort untergebracht sein.

In einer besonders vorteilhaften Ausgestaltung kann eine automatische Bremseinrichtung zum Halten des durch Betätigung des oder eines Bedienelements in den Stillstand gebrachten Kraftfahrzeugs vorgesehen sein. Sinkt die Geschwindigkeit des Kraftfahrzeugs durch Betätigung des Bedienelementes demnach auf Null, so wird eine Bremseinrichtung aktiviert, die verhindert, dass das Kraftfahrzeug sich beispielsweise durch das Standgas oder durch einen geneigten Fahruntergrund wieder in Bewegung setzen kann. Solche Bremseinrichtungen sind vom Prinzip her bekannt, sie werden beispielsweise auch bei automatischen Abstandshaltesystemen eingesetzt. Wird das Fahrzeug - entweder durch Betätigung des Gaspedals oder durch Betätigung des Bedienelements - wieder beschleunigt, so löst sich die automatische Bremseinrichtung selbsttätig wieder.

Eine solche Bremseinrichtung kann vorteilhafterweise mit einer Innenraumüberwachung oder dergleichen verbunden werden. Dabei soll überprüft werden, ob sich der Fahrer noch ordnungsgemäß im Fahrersitz befindet. Es wird beispielsweise festgestellt, ob der Fahrer das Kraftfahrzeug durch Betätigung des Bedienelements zum Stillstand bringt und das Fahrzeug danach verlässt. In solchen Fällen wird die Bremseinrichtung deaktiviert und ein anderes Bremssystem, beispielsweise eine Handbremse, wird aktiviert. Alternativ kann selbstverständlich auch ein Warnsignal gegeben werden. Eine solche Innenraumüberwachung kann verschieden ausgestaltet sein. So kann eine Kamera vorgesehen sein, deren aufgenommenen Bilder durch eine Bildverarbeitung analysiert werden, oder es kann ein Sensor vorgesehen sein, der feststellt, ob der Fahrersitz besetzt ist.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze des erfindungsgemäßen Kraftfahrzeugs,
- Fig. 2: das Lenkrad des erfindungsgemäßen Kraftfahrzeugs in einer ersten Ausführungsform,
- Fig. 3: einen am Lenkstock angebrachten Bedienhebel in dem erfindungsgemäßen Kraftfahrzeug gemäß einer zweiten Ausführungsform,
- Fig. 4: Graphen, die die Ist-Geschwindigkeit des Kraftfahrzeugs und die Signale im zeitlichen Verlauf zeigen, und
- Fig. 5: Graphen zur Erläuterung einer weiteren Bedienfunktion zur Veränderung des Beschleunigungs- und/oder Abbremsverhaltens.

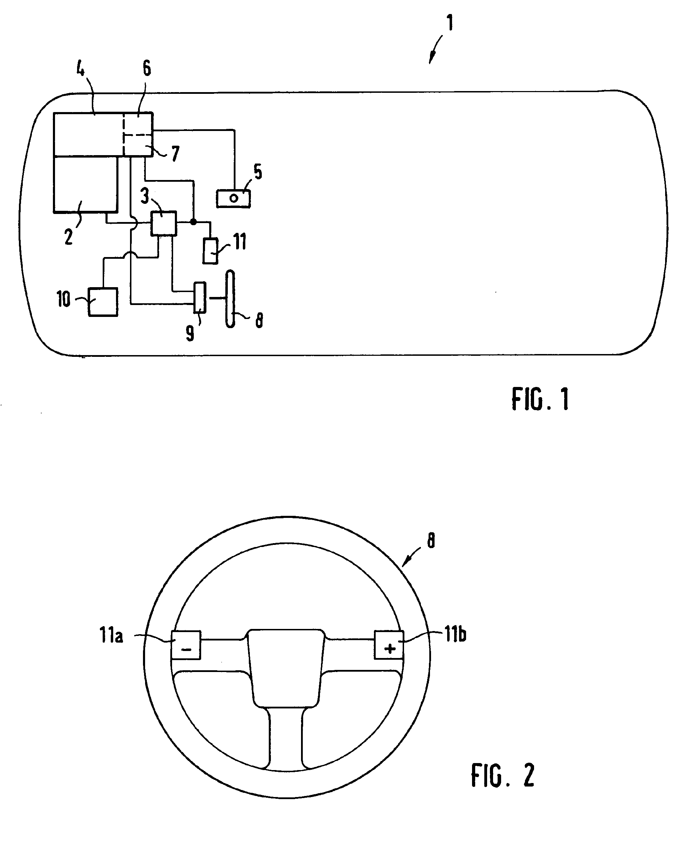

Fig. 1 zeigt ein erfindungsgemäßes Kraftfahrzeug 1. Es umfasst einen Motor 2, der von einer Steuerungseinrichtung 3 für den Motor 2 angesteuert wird. Dem Motor 2 ist zudem ein Getriebe 4 zugeordnet. Bei dem Getriebe 4 kann es sich um ein Handschaltgetriebe oder ein Automatikgetriebe handeln. Das Getriebe 4 wird mittels einer Schalteinheit 5 angesteuert. Handelt es sich um ein Handschaltgetriebe, so umfasst das Getriebe 4 zudem eine hier nur gestrichelt angedeutete Kupplung 6, der ein Aktuator 7 zum automatischen Öffnen der Kupplung bei Bremsen in den Stillstand und zum automatischen Schließen der Kupplung bei Anfahren aus dem Stillstand zugeordnet ist. Ist das Getriebe 4 als Automatikgetriebe ausgebildet, so sind die Komponenten 6 und 7 nicht erforderlich.

Die Steuerungseinrichtung 3 erhält Signale, nach denen sie den Motor 2 steuert, aus verschiedenen Quellen. Zunächst ist unterhalb eines Lenkrades 8 eine Pedalerie 9 vorgesehen, die im Falle eines Automatikgetriebes ein Gaspedal und ein Bremspedal umfasst, im Falle eines Handschaltgetriebes zusätzlich ein Kupplungspedal. Über die Pedalerie 9 kann auch eine unmittelbare Ansteuerung des Motors 2 beziehungsweise durch das Kupplungspedal des Getriebes 4 erfolgen.

Zusätzlich ist ein Fahrerassistenzsystem 10 zur Geschwindigkeitsregelung vorgesehen. Auch dieses kommuniziert mit der Steuerungseinrichtung 3. Im Bereich des Lenkrads 8, also am Lenkrad 8 oder benachbart dazu, ist weiterhin wenigstens ein Bedienelement 11 zur manuellen Betätigung vorgesehen, das mit der Steuerungseinrichtung 3 kommuniziert und durch das bei Betätigung wenigstens ein digitales Signal zur Steuerung der Fahrzeuggeschwindigkeit erzeugbar ist. Die Steuerungseinrichtung 3 ist dazu ausgebildet, in Abhängigkeit des hier von dem Bedienelement 11 übermittelten Signals den Motor 2 zum Beschleunigen oder Abbremsen des Kraftfahrzeugs 1 anzusteuern.

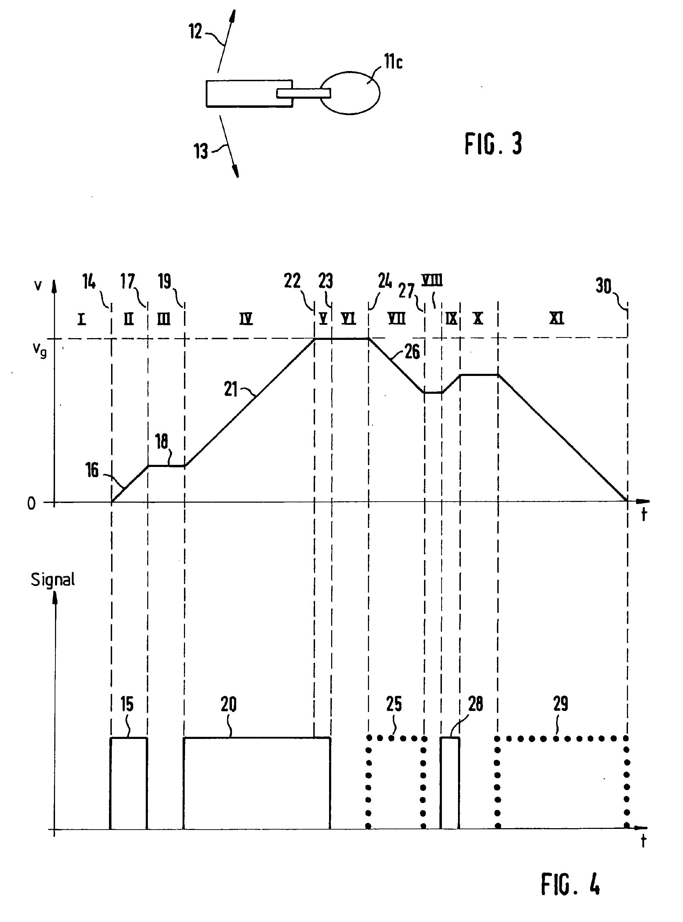

Ausführungsbeispiele für das oder die Bedienelemente 11 sind in den Figuren 2 und 3 dargestellt.

Fig. 2 zeigt das Lenkrad 8 aus der Sicht eines Fahrers. Es umfasst zwei Bedienelemente 11a, 11b, die mit "-" und "+" beschriftet sind. Bei einer Betätigung des Bedienelements 11a wird ein Abbremssignal erzeugt und der Steuerungseinrichtung 3 übermittelt, welche den Motor 2 so ansteuert, dass das Kraftfahrzeug während der Betätigungsdauer des Bedienelements 11a, welches durch die am Lenkrad 8 befindlichen Hände leicht erreichbar ist, gleichmäßig abbremst. Durch Betätigung des Bedienelements 11 b wird ein Beschleunigungssignal erzeugt und an die Steuerungseinrichtung 3 übermittelt, welches analog für eine gleichmäßige Beschleunigung des Kraftfahrzeugs 1 sorgt.

Die beiden Bedienelemente 11a und 11 b beziehungsweise die Steuerungseinrichtung 3 sind so ausgestaltet, dass nur ein Signal, vorzugsweise das des Bedienelements 11a, bei gleichzeitiger Betätigung der Bedienelemente 11a und 11b erzeugt beziehungsweise verarbeitet wird.

Fig. 3 zeigt einen am Lenkstock des Lenkrads 8 angeordneten Bedienhebel 11 c, der als Alternative zu den Bedienelementen 11a und 11 b verwendet werden kann. Wird der Bedienhebel 11c nach oben, Pfeil 12, bewegt, so wird ein Beschleunigungssignal erzeugt. Wird der Bedienhebel 11c nach unten, Pfeil 13, bewegt, so wird ein Abbremssignal erzeugt.

Der Bedienhebel 11c dient in diesem Ausführungsbeispiel auch zur Bedienung des Fahrerassistenzsystems 10. Dabei handelt es sich um ein Geschwindigkeitsregelsystem. Wird der Bedienhebel 11c zur Ansteuerung des Fahrerassistenzsystems 10 verwendet, so löst eine Bewegung in Richtung des Pfeils 12 eine Erhöhung der Regelgeschwindigkeit um 10 km/h aus, eine Bewegung entlang des Pfeils 13 eine Erniedrigung der Regelgeschwindigkeit um 10 km/h. Unabhängig davon, zu welchem Zweck der Bedienhebel 11c augenblicklich verwendet wird, assoziiert ein Fahrer damit doch einen Beschleunigungs- oder Bremsvorgang bei Bewegungen in verschiedene Richtungen.

Der Wechsel der Funktionalität kann auf verschiedene Art und Weise ausgestaltet sein. Zum einen ist vorstellbar, dass ein weiteres Bedienelement vorgesehen ist, mit dem ausgewählt werden kann, ob der Bedienhebel 11 c zur Bedienung des Fahrerassistenzsystems 10 oder zum Erzeugen von Abbrems- beziehungsweise Beschleunigungssignalen dient. Es ist jedoch auch denkbar, dass der Bedienhebel 11c nur bei aktiviertem Fahrerassistenzsystem 10 zur Steuerung des Fahrerassistenzsystems 10 dient, ansonsten aber zur Erzeugung von Abbrems- oder Beschleunigungssignalen.

Fig. 4 zeigt anhand zweier Graphen die Funktionsweise des durch das Bedienelement 11 geschwindigkeitsgeregeiten Kraftfahrzeugs 1. Im oberen Teil der Fig. 4 ist die Ist-Geschwindigkeit v des Kraftfahrzeugs 1 gegen die Zeit t aufgetragen, im unteren Graphen das Vorhandensein eines Beschleunigungssignals (durchgezogene Linie) oder eines Abbremssignals (gepunktete Linie). Diese Signale können durch Betätigung der Bedienelemente 11a, 11b oder alternativ durch Betätigung des Bedienhebels 11c erzeugt werden. In einem ersten Zeitintervall I befindet sich das Kraftfahrzeug im Stillstand. Zum Zeitpunkt 14 wird das Bedienelement 11b betätigt beziehungsweise der Bedienhebel 11 c als Betätigung in Richtung des Pfeils 12 ausgelenkt. Dadurch wird für die Dauer der Betätigung, Zeitintervall II, ein Beschleunigungssignal 15 erzeugt. Das Beschleunigungssignal 15 hat die Wirkung, dass sich die Geschwindigkeit v des Kraftfahrzeugs 1 linear mit einem festgelegten Gradienten 16 erhöht. Zum Zeitpunkt 17 endet die Betätigung des Bedienelements 11, so dass das Signal 15 beendet wird. Dementsprechend wird die Geschwindigkeit v des Kraftfahrzeugs 1 nicht weiter erhöht.

Während des Zeitintervalls III findet keine Beschleunigung oder Abbremsung statt, da das oder die Bedienelemente 11 nicht betätigt werden. Das Fahrzeug fährt mit einer konstanten Geschwindigkeit 18.

Zum Zeitpunkt 19 wird durch Betätigung des oder der Bedienelemente 11 wiederum ein Beschleunigungssignal 20 erzeugt. Das Kraftfahrzeug 1 beschleunigt linear entlang eines Gradienten 21, wobei die Steigung dieselbe wie im Intervall 11 ist. Zum Zeitpunkt 22 wird eine Grenzgeschwindigkeit V_{g} erreicht, welche durch Betätigung des oder der Bedienelemente 11 nicht überschritten werden darf. Folglich steuert die Steuereinrichtung 3 im Motor 2 nicht weiter zur Beschleunigung des Kraftfahrzeugs 1 an, so dass die Geschwindigkeit im Zeitintervall V konstant der Grenzgeschwindigkeit entspricht, obwohl das Bedienelement 11b beziehungsweise der Bedienhebel 11c weiterhin betätigt wird. Zum Zeitpunkt 23 wird die Betätigung des Bedienelements 11b beziehungsweise des Hebels 11c beendet.

Auch im folgenden Zeitintervall VI, in dem das oder die Bedienelemente 11 nicht betätigt werden, bewegt sich das Kraftfahrzeug 1 weiterhin mit der konstanten Geschwindigkeit V_{g}.

Zum Zeitpunkt 24 wird nun das Bedienelement 11a beziehungsweise der Bedienhebel 11c in Richtung des Pfeils 13 betätigt. Dadurch wird ein Abbremssignal 25 erzeugt. Solange die Steuereinrichtung 3 das Abbremssignal 25 empfängt, also im Zeitintervall VII, wird die Fahrzeuggeschwindigkeit v entlang eines Gradienten 26, dessen Steigungsbetrag derselbe ist wie der der Gradienten 16 und 21, linear erniedrigt. Zum Zeitpunkt 27 endet die Betätigung des Bedienelements 11a beziehungsweise des Bedienhebels 11c, so dass die Geschwindigkeit im Folgenden Zeitintervall VIII unverändert bleibt.

Während des Zeitintervalls IX wird wiederum ein Beschleunigungssignal 28 erzeugt, so dass das Kraftfahrzeug 1 wieder beschleunigt wird. Im Zeitintervall X folgt wiederum keine Betätigung des oder der Bedienelemente 11, so dass die Geschwindigkeit konstant bleibt. Im Zeitintervall XI wird dann wiederum durch Betätigung des entsprechenden Bedienelements 11 a oder 11 c ein Abbremssignal 29 erzeugt, wobei das Bedienelement solange gehalten wird, bis das Fahrzeug zum Zeitpunkt 30 wieder zum Stillstand gekommen ist.

Bei einem Handschaltgetriebe, bei dem der Aktuator 7 vorgesehen ist, wird bei erzeugtem Beschleunigungssignal auch der Aktuator 7 aktiviert, so dass beispielsweise bei Losfahren aus dem Stillstand die Kupplung entsprechend geschlossen wird. Analog wird der Aktuator 7 auch bei Erzeugung eines Abbremssignals aktiviert, so dass die Kupplung geöffnet wird, wenn sich das Kraftfahrzeug 1 dem Stillstand nähert. Ist mittels Betätigung des entsprechenden Bedienelements 11a beziehungsweise 11c entlang des Pfeils 13 das Kraftfahrzeug zum Stillstand gebracht worden, so wird eine nicht näher gezeigte automatische Bremseinrichtung aktiviert, die das Kraftfahrzeug 1 im Stillstand hält.

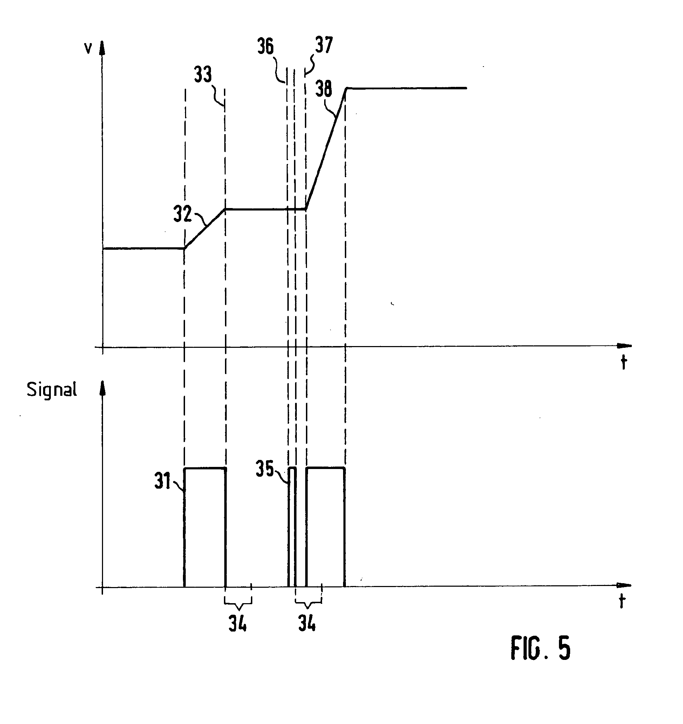

Fig. 5 zeigt eine mögliche Realisierung einer weiteren Bedienfunktion anhand zweier weiterer Graphen. Im oberen Graphen ist wiederum die Ist-Geschwindigkeit v des Kraftfahrzeugs 1 gegen die Zeit t aufgetragen, im unteren Graphen das Signal, hier das Beschleunigungssignal, gegen die Zeit t. Wird durch dauerhaftes Betätigen des entsprechenden Bedienelements 11 ein Beschleunigungssignal 31 erzeugt, so wird die Geschwindigkeit wie üblich nach dem vorbestimmten Beschleunigungs- und Abbremsverhalten linear entlang des Gradienten 32 mit einer vorbestimmten Steigung erhöht. Endet das Beschleunigungssignal 31 durch Beendigung der Betätigung des entsprechenden Bedienelements 11 zum Zeitpunkt 33, so bewegt sich das Fahrzeug wie bekannt mit konstanter Geschwindigkeit weiter. Jedoch ist vorgesehen, dass für eine vorbestimmte Zeitdauer 34 eine erneute Erzeugung eines Beschleunigungssignals zu einem veränderten Beschleunigungsverhalten führt. Nach dem Zeitpunkt 33 folgt keine weitere Betätigung des entsprechenden Bedienelements 11. Ein Beschleunigungssignal 35 wird erst zu einem späteren Zeitpunkt 36 wieder erzeugt. Hierbei wird ein sehr kurzes Beschleunigungssignal 35 erzeugt, das bedeutet, der Fahrer tippt beispielsweise den Bedienhebel 11c nur kurz an. Innerhalb der danach folgenden Zeitdauer 34 wird das entsprechende Bedienelement 11 jedoch wieder betätigt, Zeitpunkt 37. Das Beschleunigungsverhalten des Kraftfahrzeugs 1 ist nun verändert, es beschleunigt entlang des Gradienten 38 mit einer größeren Steigung als entlang des Gradienten 32. So können auf einfache Art und Weise mittels des oder der Bedienelemente 11 verschiedene Beschleunigungs- und/oder Abbremsverhalten ausgewählt werden. Selbstverständlich ist es auch denkbar, ein weiteres Bedienelement vorzusehen, mit dem sich das Beschleunigungs- und/oder Abbremsverhalten verändern lässt.

Zum Abschluss soll noch angemerkt werden, dass eine Betätigung des Gaspedals oder Bremspedals der Pedalerie 9 bei dem erfindungsgemäßen Kraftfahrzeug 1 jeweils Vorrang vor einer Betätigung des wenigstens einen Bedienelements 11 hat. Die Signale des wenigstens einen Bedienelements 11 werden bei Betätigung des Gas- oder Bremspedals von der Steuerungseinrichtung 3 ignoriert oder das wenigstens eine Bedienelement 11 wird deaktiviert.

Zur Aktivierung oder Deaktivierung des wenigstens einen Bedienelements 11 sind noch weitere Ausgestaltungen denkbar, beispielsweise kann dies durch ein weiteres Bedienelement geschehen. In jedem Fall ist es sinnvoll, eine hier nicht näher gezeigte Anzeigevorrichtung zu verwenden, die anzeigt, inwieweit das wenigstens eine Bedienelement 11 gerade aktiv ist.

## Patentansprüche

1. Kraftfahrzeug, umfassend einen Motor (2) und eine Steuerungseinrichtung (3) für den Motor (2),
**dadurch gekennzeichnet,**
**dass** wenigstens ein manuell zu betätigendes, mit der Steuerungseinrichtung (3) kommunizierendes Bedienelement (11, 11a, 11b) vorgesehen ist, durch das bei Betätigung wenigstens ein digitales Signal (15, 20, 25, 28, 29, 31, 35) zur Steuerung der Fahrzeuggeschwindigkeit erzeugbar ist, wobei während der Betätigung des Bedienelements (11, 11a, 11b) die Steuerungseinrichtung (3) in Abhängigkeit des ihr von dem Bedienelement (11, 11a, 11b) übermittelten Signals (15, 20, 25, 28, 29, 31, 35) zur Ansteuerung des Motors (2) zum Beschleunigen oder Abbremsen des Kraftfahrzeugs (1) ausgebildet ist.

2. Kraftfahrzeug nach Anspruch 1,
**dadurch gekennzeichnet,**
**dass** aufgrund des Signals (15, 20, 25, 28, 29, 31, 35) das Kraftfahrzeug (1) gleichmäßig beschleunigbar oder abbremsbar ist.

3. Kraftfahrzeug nach Anspruch 1 oder 2,
**dadurch gekennzeichnet,**
**dass** eine Bedienfunktion zur Veränderung eines zuvor bestimmten Beschleunigungs- und/oder Abbremsverhaltens vorgesehen ist.

4. Kraftfahrzeug nach Anspruch 3,
**dadurch gekennzeichnet,**
**dass** als die Bedienfunktion ein Beenden der Betätigung des Bedienelements (11, 11a, 11b) vorgesehen ist, wobei nach Beendigung der Betätigung für eine vorbestimmte Zeitdauer (34) bei erneuter Betätigung ein verändertes Beschleunigungs- und/oder Abbremsverhalten anwählbar ist.

5. Kraftfahrzeug nach einem der vorangehenden Ansprüche,
**dadurch gekennzeichnet,**
**dass** die Steuerungseinrichtung (3) zur Nichtberücksichtigung des Signals (15, 20, 25, 28, 29, 31, 35) bei einem betätigten Gas- und/oder Bremspedal ausgebildet ist.

6. Kraftfahrzeug nach einem der vorangehenden Ansprüche,
**dadurch gekennzeichnet,**
**dass** mittels des einen Bedienelements (11) abhängig von der Art der Betätigung ein Abbremssignal (25, 29) und ein Beschleunigungssignal (15, 20, 28, 31, 35) erzeugbar ist.

7. Kraftfahrzeug nach einem der Ansprüche 1 bis 5,
**dadurch gekennzeichnet,**
**dass** zwei Bedienelemente (11a, 11b) vorgesehen sind, wobei über das erste Bedienelement (11a) ein Abbremssignal (25, 29) und über das zweite Bedienelement (11b) ein Beschleunigungssignal (15, 20, 28, 31, 35) erzeugbar ist.

8. Kraftfahrzeug nach Anspruch 7,
**dadurch gekennzeichnet,**
**dass** die Bedienelemente (11a, 11b) so ausgebildet sind, dass bei gleichzeitiger Betätigung der Bedienelemente (11a, 11b) nur ein Signal (15, 20, 25, 28, 29, 31, 35) erzeugbar ist.

9. Kraftfahrzeug nach einem der vorangehenden Ansprüche,
**dadurch gekennzeichnet,**
**dass** das oder die Bedienelemente (11, 11 a, 11 b) einem anderen Fahrzeugsystem, insbesondere einem Fahrerassistenzsystem (10), zugeordnete Bedienelemente sind, das oder die gegebenenfalls in ihrer Funktion veränderbar sind.

10. Kraftfahrzeug nach einem der vorangehenden Ansprüche,
**dadurch gekennzeichnet,**
**dass** das oder die Bedienelemente (11, 11a, 11b) an oder benachbart zu einem Lenkrad (8) angeordnet sind.

11. Kraftfahrzeug nach Anspruch 10,
**dadurch gekennzeichnet,**
**dass** das Bedienelement (11) ein am Lenkstock angeordneter Bedienhebel (11c) ist.

12. Kraftfahrzeug nach einem der vorangehenden Ansprüche,
**dadurch gekennzeichnet,**
**dass** ein Grenzgeschwindigkeit (v_{G}) vorgesehen ist, bis zu der das Kraftfahrzeug (1) mittels Betätigung des oder eines Bedienelements (11, 11a, 11b) beschleunigbar ist.

13. Kraftfahrzeug nach Anspruch 12,
**dadurch gekennzeichnet,**
**dass** die Grenzgeschwindigkeit 50 bis 70 km/h, vorzugsweise 60 km/h, beträgt.

14. Kraftfahrzeug nach einem der vorangehenden Ansprüche,
**dadurch gekennzeichnet,**
**dass** es ein Handgetriebe mit einer Kupplung (6) und einem dieser zugeordneten Aktuator (7) zum automatischen Öffnen der Kupplung (6) bei Bremsen in den Stillstand und automatischen Schließen der Kupplung (6) bei Anfahren aus dem Stillstand umfasst, welcher Aktuator (7) in Abhängigkeit des Signals (15, 20, 25, 28, 29, 31, 35) ansteuerbar ist.

15. Kraftfahrzeug nach einem der vorangehenden Ansprüche,
**dadurch gekennzeichnet,**
**dass** das oder die Bedienelemente (11, 11a, 11b), insbesondere durch ein weiteres Bedienelement, aktivierbar und/oder deaktivierbar sind.

16. Kraftfahrzeug nach einem der vorangehenden Ansprüche,
**dadurch gekennzeichnet,**
**dass** das oder die Bedienelemente (11, 11a, 11b) durch Betätigung eines Gaspedals und/oder eine Bremspedals und/oder eines Kupplungspedals deaktivierbar sind.

17. Kraftfahrzeug nach Anspruch 15 oder 16,
**dadurch gekennzeichnet,**
**dass** es eine Anzeigevorrichtung zur Anzeige des aktivierten oder deaktivierten Zustands des oder der Bedienelemente (11, 11a, 11b) umfasst.

18. Kraftfahrzeug nach einem der vorangehenden Ansprüche,
**dadurch gekennzeichnet,**
**dass** eine automatische Bremseinrichtung zum Halten des durch Betätigung des oder eines Bedienelements (11, 11a, 11b) in den Stillstand gebrachten Kraftfahrzeugs (1) vorgesehen ist.
